# EUROPEAN PATENT APPLICATION

(11) **EP 1 978 756 A1**
(43) Date of publication of application: **08.10.2008**
(21) Application number: 06828282.1
(22) Date of filing: 08.12.2006
(51) Int. Cl.: H04Q 3/00

(54) **DEVICE, SYSTEM AND METHOD FOR PERFORMING AUTHENTICATION BY MEANS OF PASSWORD**

(30) Priority: 26.01.2006 CN 200610033420
(71) Applicant: Huawei Technologies Co., Ltd., Longgang District, Shenzhen, Guangdong 518129 (CN)
(72) Inventor: LIU, Chensheng, Guangdong 518129 (CN)
(74) Representative: Hengelhaupt, Jürgen
(86) International application number: PCT/CN2006/003352
(87) International publication number: WO 2007/085168

(57) **Abstract**

An apparatus, system, and method for authentication by password include: an apparatus placed at the network side receives an audio signal generated by an audio card which contains an account ID and dynamically generated first authentication information; the apparatus extracts the account ID and the first authentication information from the audio signal and generates second authentication information of the audio card according to the first information associated with the account ID; then, the audio card that sends the audio signal is authenticated according to the first authentication information and the second authentication information and if the authentication succeeds, use of the audio card is allowed or else, use of the audio card is forbidden. With the present invention, a password dynamically generated by an audio card can be authenticated so that the security of the audio card is assured.

## Description

### Field of the Invention

The present invention relates to communication technologies, and particularly to an apparatus, system, and method for authentication by password.

### Background of the Invention

The intelligent network (IN) is a system that generates and implements various IN services in a fast, flexible, convenient, and cost-effective manner. The IN system can serve various communication networks. For example, it can provide free phone service, account card service, and telephone card service. During implementation of various services, applicable service accounts and passwords are used. These service accounts and passwords are usually stored on the background server of the intelligent network.

In the prior art, in an intelligent network, service accounts and passwords are managed through a dedicated management flow. The specific management procedure is as follows:

A user dials a management access code on a communication terminal; the user enters a card number (account ID) and password following the voice announcements of the system; the background server manages the password. Before a new password is set, all calls of the account use the same password.

In the above procedure, if the password is known to anyone else, the account may be easily embezzled to get related services. Even worse, the password may be changed so that the legal owner of the account cannot continue using the account.

In the prior method, all calls between two password changes use the same password, so it is impossible to authenticate the legality of the user. Moreover, the background server is unable to check whether the account is embezzled. The security is poor.

### Summary of the Invention

Embodiments of the present invention provide an apparatus, system, and method for authentication by password, to authenticate the passwords dynamically generated by audio cards, so that better security is achieved during service provisioning.

An embodiment of the invention provides an audio card authentication controller, including:
an audio card information storing unit, adapted to acquire and store first information of an audio card; and
an audio card information sending unit, adapted to send the first information stored in the audio card information storing unit to an audio card authentication server.

Another embodiment of the invention provides an audio card authentication server, including:
an authentication information acquiring unit, adapted to receive first information of an audio card stored by an audio card authentication controller and first authentication information dynamically generated by the audio card;
a second authentication information generating unit, adapted to generate second authentication information in a preset rule according to the first information; and
an authentication executing unit, adapted to authenticate the audio card according to the first authentication information and the second authentication information.

An embodiment of the invention provides a system for authentication by password, including:
an audio card information extracting apparatus, adapted to receive an audio signal that contains an account ID and first authentication information dynamically generated, sent by an audio card through a communication terminal, and extract the account ID and the first authentication information from the audio signal;
an audio card authentication controller, adapted to acquire the first information according to the account ID of the audio card provided by the audio card information extracting apparatus and send the first information to an audio card authentication server; and
an audio card authentication server, adapted to generate second authentication information of the audio card according to the first information, authenticate the audio card according to the first authentication information and the generated second authentication information, and allow using the audio card if the authentication succeeds or forbid using the audio card if the authentication fails.

An embodiment of the present invention provides a method for authentication by password, including:
receiving an audio signal generated by an audio card which contains an account ID and dynamically generated first authentication information;
extracting the account ID and the first authentication information from the audio signal, determining the first information of the audio card and generating second authentication information of the audio card according to the first information; and
authenticating the audio card that sends the audio signal according to the first authentication information and the second authentication information, and allowing using the audio card if the authentication succeeds or forbidding using the audio card if the authentication fails.

The embodiments of the invention realize the authentication of a password dynamically generated by an audio card so that the security of the audio card is assured.

The following describes the technical solution of the invention in detail through figures and embodiments.

### Brief Description of the Drawings

Figure 1 shows a procedure for authentication by password according to an embodiment of the invention;
Figure 2 shows a specific procedure for authentication by password according to an embodiment of the invention;
Figure 3 shows a specific procedure for authentication by password according to another embodiment of the invention;
Figure 4 shows another specific procedure for authentication by password according to one embodiment of the invention;
Figure 5 shows the structure of a system and apparatus for authentication by password according to an embodiment of the invention;
Figure 6 shows the structure of a system for authentication by password on the basis of an intelligent network according to an embodiment of the invention;
Figure 7 shows the structure of an authentication server according to an embodiment of the invention; and
Figure 8 shows the structure of an authentication server according to another embodiment of the invention.

### Detailed Description of the Invention

In embodiments of the invention, a user is authenticated using a password dynamically generated by an audio card in an intelligent network.

The audio card includes an IC chip, a dynamic password generating unit, a modulating unit (which converts the information and password generated by the IC chip into an audio signal in a preset format) and a sounding unit. To use an audio card, press the audio card slightly. Once an audio card is activated, its sounding unit sends out a series of audio signals that contain the account ID and password. The background server can modulate and utilize this information.

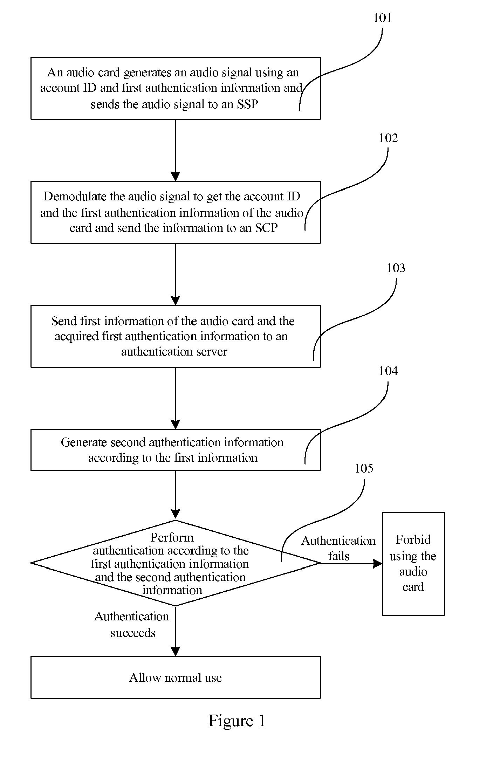

As shown in Figure 1, a procedure for authentication by password according to an embodiment of the invention includes:
Block 101: An audio card generates an audio signal using the account ID and the first authentication information and sends the signal to a service switching point (SSP) through a communication terminal.
   If the communication terminal is a fixed telephone, the audio card is pressed right in front of the microphone after off-hook to modulate the first authentication information and generate an audio signal that contains the account ID and the first authentication information. Then the signal is sent to the SSP through the telephone.
Block 102: The SSP demodulates the audio signal to get the account ID and the first authentication information of the audio card and sends the account ID and the first authentication information to a service control point (SCP).
Block 103: The SCP acquires a first information of the audio card from a database according to the account ID and sends the acquired first information together with the received first authentication information to an authentication server.
Block 104: The authentication server acquires the second authentication information by applying a preset algorithm to the first information. This preset algorithm matches the algorithm that generates the first authentication information of the audio card, to ensure reliable implementation of subsequent authentication.
Block 105: The authentication server authenticates the audio card by comparing the first authentication information with the second authentication information. If the authentication succeeds, the audio card can be used, that is, services based on the audio card are allowed. If the authentication fails, the audio card cannot be used, that is, services based on the audio card are forbidden.

In block 105, if the audio card is authenticated successfully, the SCP can provide further services for the user, for example, conversation and recharge. If the authentication fails, the authentication server determines that the audio card is embezzled. In this case, the authentication server locks the card and plays an announcement to the user that the user is forbidden to use the audio card.

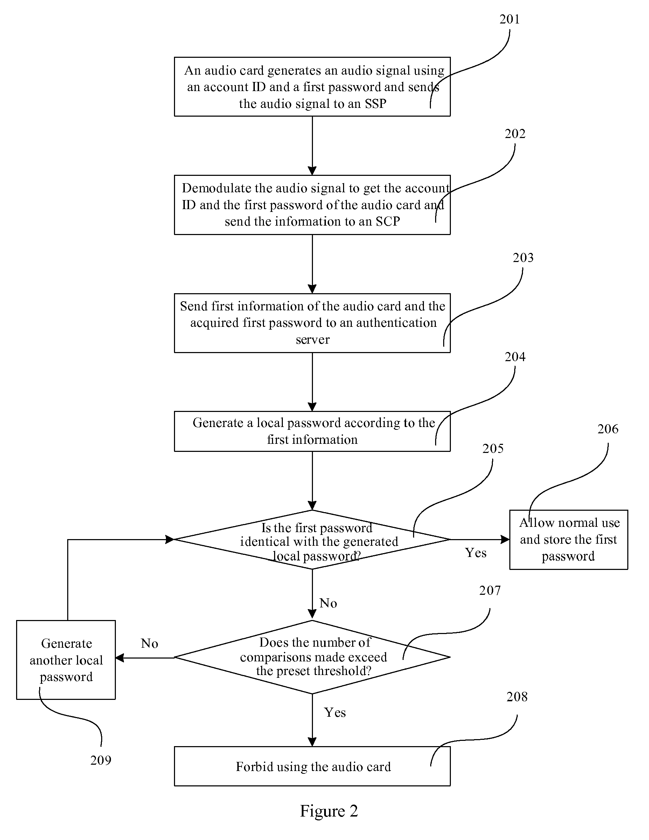

As shown in Figure 2, a procedure for authentication by password according to an embodiment of the invention includes:
Block 201: An audio card generates an audio signal using the account ID and a first password and sends the signal to an SSP through a communication terminal.
   The first password is dynamically generated according to how many times the audio card has been used. The password generation algorithm assures that every password generated by the audio card is unique. Moreover, an encryption algorithm may be used. The encryption strength depends on scenarios. There are many audio card terminals in use and the preset condition based algorithm guarantees that every audio card terminal is unique.
Block 202: The SSP demodulates the audio signal to get the account ID and the first password of the audio card and sends the account ID and the first password to an SCP.
Block 203: The SCP acquires a first information of the audio card from a database according to the account ID and sends the acquired first information together with the received first password to an authentication server.
   The first information refers to the initial information of the audio card when the audio card is used for the first time, or the first password stored at the previous normal use of the audio card.
Block 204: If the audio card is used for the first time, the authentication server generates a local password by applying a preset algorithm to the initial information of the audio card; if this is not the first use of the audio card, the authentication server generates the local password by applying the preset algorithm to the first password stored at the previous normal use of the audio card.
   The authentication server and the audio card adopt a same password generation algorithm.
Block 205: The authentication server compares the first password with the local password. If the two passwords are identical, block 206 proceeds. If the two passwords differ, block 207 proceeds.
Block 206: The account of the audio card can be normally used and the SCP stores the first password as the first information for the next authentication of the audio card.
Block 207: The authentication server checks whether the number of comparison exceeds the preset threshold. If the threshold is exceeded, block 208 proceeds; otherwise, block 209 follows.
   Specifically, the authentication server checks whether block 205 has been executed for more times than the preset threshold for this authentication of the audio card, or whether the local password is generated for more times than the preset threshold. If the threshold is crossed, block 208 proceeds; otherwise, block 209 follows.
Block 208: Use of the audio card is forbidden.
Block 209: The authentication server generates another local password according to the previous local password and executes block 205.

With block 209, if the audio signal sent by the audio card is not the first audio signal generated after the previous use, a legal user can still be authenticated successfully. For example, if the user presses the audio card unintentionally between the previous use and the sending of the current audio signal, block 209 can assure successful authentication, thus achieving normal use of the audio card.

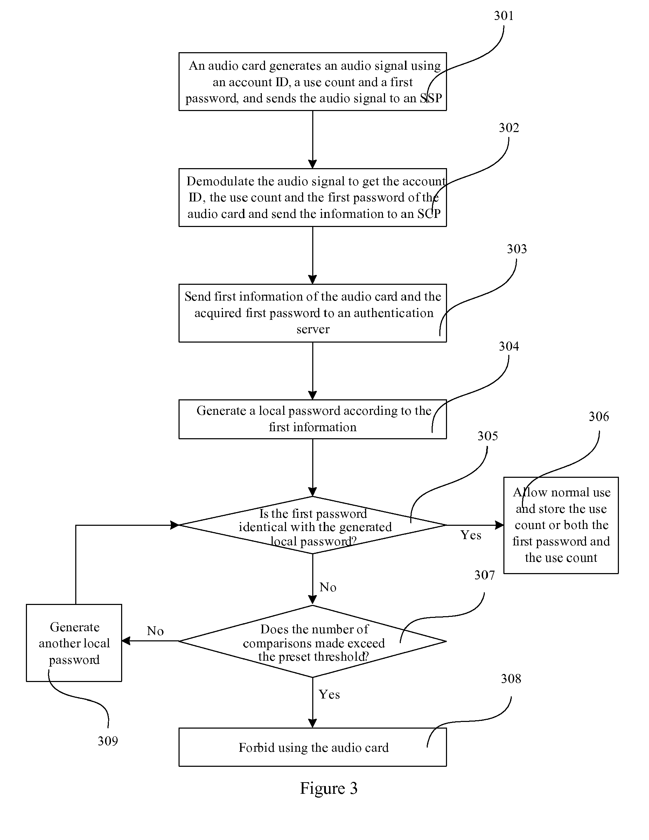

As shown in Figure 3, a procedure for authentication by password according to another embodiment of the invention includes:
Block 301: An audio card generates an audio signal using the account ID, the first password and the current use count, and sends the signal to an SSP through a communication terminal.
   The first password is dynamically generated according to how many times the audio card has been used. The password generation algorithm assures that every password generated by the audio card is unique. Moreover, an encryption algorithm may be used. The encryption strength depends on scenarios. There are many audio card terminals in use and the password generation algorithm guarantees that every audio card terminal is unique.
Block 302: The SSP demodulates the audio signal to get the account ID, the first password and the current use count of the audio card and sends the account ID, the first password and the current use count of the audio card to an SCP.
Block 303: The SCP acquires a first information of the audio card from a database according to the account ID and sends the acquired first information together with the received first password to an authentication server.
   The first information is the initial information of the audio card when the audio card is used for the first time, or in the case of a non-first use, the first information is the count of the previous correct use of the audio card or the first password stored at the previous normal use and the count of the previous correct use.
Block 304: If the audio card is used for the first time, the authentication server generates a local password by applying a preset algorithm to the initial information of the audio card; if this is not the first use of the audio card, the authentication server generates the local password according to the count of the previous correct use or the first password stored at the previous normal use of the audio card and the count of the previous correct use.
   The authentication server adopts a same password generation algorithm as the audio card. The authentication server may utilize the count of the previous correct use to generate the local password, or utilize the first password stored at the previous normal use of the audio card and the count of the previous correct use to dynamically generate the local password.
Block 305: The authentication server compares the first password with the local password. If the two passwords are identical, block 306 proceeds. If the two passwords differ, block 307 proceeds.
Block 306: The account of the audio card can be used normally and the SCP stores the use count of the audio card or the first password of the current use and the use count of the audio card as the first information for the next authentication of the audio card.
Block 307: The authentication server checks whether the number of comparison exceeds the preset threshold. If the threshold is exceeded, block 308 proceeds; otherwise, block 309 follows.
Block 308: Use of the audio card is forbidden.
Block 309: The authentication server generates another local password according to the previous local password and executes block 305 to resolve the problem that the first password and the local password are not generated simultaneously.

In block 304, if the audio card is used for the first time, the authentication server may dynamically generate not only a local password but also the current use count, that is, the first use, according to the initial information of the audio card. In the case of a non-first use, the authentication server generates the local password dynamically according to the count of the previous correct use or the first password stored at the previous normal use and the count of the previous correct use. In this case, the authentication server may also generate the current use count of the audio card, that is, the count of the previous correct use plus one.

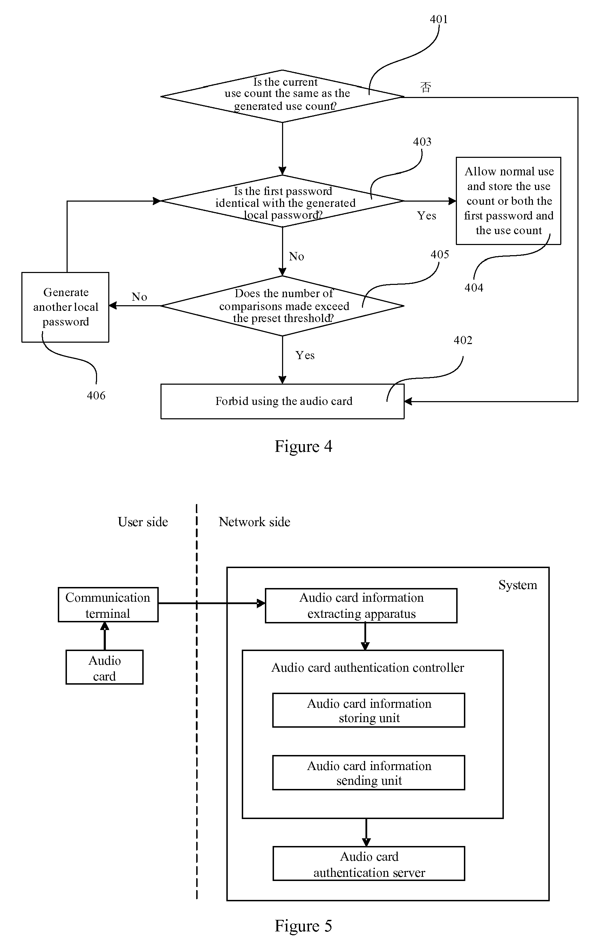

As shown in Figure 4, the authentication procedure includes:
Block 401: The authentication server compares the current use count of the audio card and the generated use count. If the two counts are different, block 402 proceeds; if the two are identical, block 403 follows.
Block 402: Use of the audio card is forbidden.
Block 403: The authentication server compares the first password with the local password. If the two passwords are identical, block 404 proceeds. If the two passwords differ, block 405 follows.
Block 404: The audio card can be used normally and the SCP stores the current use count of the audio card or the current use count and the first password of the current use.
Block 405: The authentication server checks whether the number of comparison exceeds the preset threshold. If the threshold is crossed, block 402 proceeds; otherwise, block 406 follows.
Block 406: The authentication server generates another local password according to the previous local password and executes block 403 to resolve the problem that the first password and the local password are not generated simultaneously.

For better understanding of the invention, the following describes the system, apparatus and authentication server disclosed by the invention in detail with reference to the embodiments and accompanying drawings.

An embodiment of the invention provides a system for authentication by password, as shown in Figure 5. The system includes:
(1) an audio card information extracting apparatus
   adapted to receive an audio signal that contains the account ID and the dynamically generated first authentication information and extract the account ID and the first authentication information from the audio signal;
   wherein, the audio signal generated by the audio card is sent by a communication terminal;
(2) an audio card authentication controller
   adapted to determine a first information stored for the audio card according to the received account ID and send the first information to the audio card authentication server, or send the first information and the first authentication information together to the audio card authentication server if the audio card information extracting apparatus sends first authentication information together with the account ID;
(3) an audio card authentication server
   adapted to generate second authentication information of the audio card according to the first information, authenticate the audio card according to the first authentication information and the generated second authentication information, and allow using the audio card if the authentication succeeds or forbid using the audio card if the authentication fails.

If the system is implemented in an intelligent network, the audio card information extracting apparatus may be placed at a service switching point (SSP), the audio card authentication controller may be placed at a service control point (SCP), and the communication terminal sends the audio signal generated by the audio card to the authentication server by way of the SSP and the SCP.

The SSP is adapted to demodulate the audio signal sent by the communication terminal to get the account ID and the first authentication information contained in the audio signal and send the information to the SCP.

The SCP is adapted to acquire a first information of the audio card from a database according to the account ID and send the first information and the first authentication information to the authentication server.

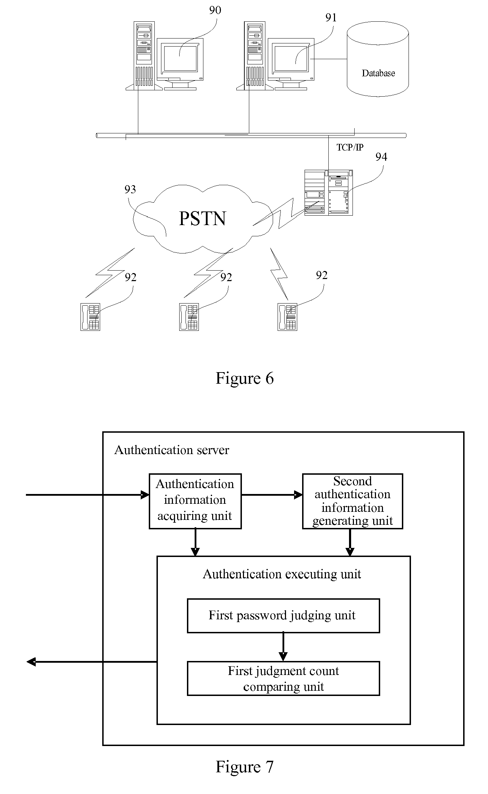

The specific system implemented in an intelligent network according to an embodiment of the invention is shown in Figure 6, where an authentication server 90 is added in the intelligent network, adapted to authenticate the validity of an audio card. The authentication server 90 may be a standalone apparatus or a software module of an SCP 91. As shown in Figure 6, there are several communication terminals 92 and an SSP 94; the SSP 94 exchanges information with the communication terminals 92 through a communication network 93; the SCP 91 is connected to the SSP 94; the authentication server 90 is connected to the SCP 91, and adapted to compute authentication information according to a preset algorithm. The communication terminals 92 send information to the SCP 91 via the SSP 94 or an advanced intelligent peripheral (AIP) through the communication network 93.

The following describes the two major entities in the system disclosed by the invention with reference to the embodiments and accompanying drawings.
(I) An audio card authentication controller, the structure of which is shown in Figure 5, including:
   (1) an audio card information storing unit, adapted to acquire and store first information of an audio card;
      the audio card information storing unit acquires initial information of the audio card and stores the initial information as the first information; and receives the first authentication information sent by an audio card authentication server to update the first information, where the first authentication information is the authentication information sent by the audio card to the audio card authentication server;
   (2) an audio card information sending unit, adapted to send the first information stored in the audio card information storing unit to the audio card authentication server.
(II) An audio card authentication server, including an authentication information acquiring unit, a second authentication generating unit and an authentication executing unit, detailed in two embodiments:

The structure of an audio card authentication server according to an embodiment is shown in Figure 7, including:
(1) an authentication information acquiring unit, adapted to receive first information stored by an audio card authentication controller and first authentication information dynamically generated by an audio card;
   the first authentication information includes the first password generated according to the use count of the audio card or includes the first password and the current use count of the audio card;
(2) a second authentication information generating unit, adapted to generate second authentication information in a preset rule according to the first information;
   the second authentication information includes a local password generated according to the first information;
(3) an authentication executing unit, adapted to authenticate the audio card according to the first authentication information and the second authentication information, further including:
   a first password judging unit, adapted to compare the first password with the generated local password and, if the two passwords are identical, allow using the audio card and control the SCP to store the current first password, or the current use count, or both the current first password and the current use count of the audio card, or else trigger a judgment count comparing unit;
   a first judgment count comparing unit, adapted to determine whether the number of judgments made by the password judging unit exceeds a present threshold and, if the threshold is exceeded, forbid using the audio card, or else generate another local password according to the previous local password and trigger the password judging unit again.

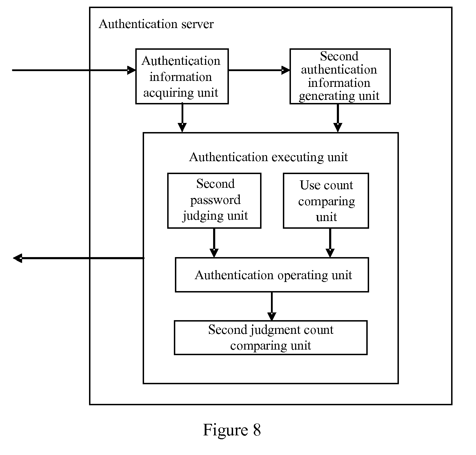

The structure of an audio card authentication server according to another embodiment is shown in Figure 8, including:
(1) an authentication information acquiring unit, adapted to receive first information stored by an audio card authentication controller and first authentication information dynamically generated by an audio card;
   where, the first authentication information includes a first password generated according to the use count of the audio card and further includes the current use count of the audio card;
(2) a second authentication information generating unit, adapted to generate second authentication information in a preset rule according to the first information;
   where, the second authentication information includes a generated local password and the generated use count of the audio card;
(3) an authentication executing unit, adapted to authenticate the audio card according to the first authentication information and the second authentication information, further including:
   a second password judging unit, adapted to judge whether the first password is identical with the local password and send the judgment result to an authentication operating unit;
   a use count comparing unit, adapted to judge whether the current use count of the audio card is the same as the generated use count and send the judgment result to the authentication operating unit;
   an authentication operating unit, adapted to allow using the audio card and control an SCP to store the current use count of the audio card or both the current use count of the audio card and the current first password if the current use count of the audio card is the same as the generated use count and the first password is the same as the local password; or forbid using the audio card if the current use count differs from the generated use count; or trigger a judgment count comparing unit if the current use count of the audio card is the same as the generated use count and the first password differs from the local password;
   a second judgment count comparing unit, adapted to determine whether the number of judgments made by the password judging unit exceeds a present threshold and, if the threshold is crossed, forbid using the audio card, or else generate another local password according to the previous local password and trigger the password judging unit again.

In the embodiments of the present invention, the authentication by password does not require a user to memorize the dynamically generated passwords. The account is safe even when the account password is stolen.

Although the invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. An audio card authentication controller, comprising:
an audio card information storing unit, adapted to acquire and store first information of an audio card; and
an audio card information sending unit, adapted to send the first information stored in the audio card information storing unit to an audio card authentication server.

2. The apparatus of claim 1, wherein, the audio card information storing unit acquires initial information of the audio card and stores the initial information as the first information; receives first authentication information sent by the audio card authentication server to update the first information, where the first authentication information is authentication information sent by the audio card to an audio card authentication server.

3. An audio card authentication server, comprising:
an authentication information acquiring unit, adapted to receive first information stored by an audio card authentication controller and first authentication information dynamically generated by an audio card;
a second authentication information generating unit, adapted to generate second authentication information in a preset rule according to the first information; and
an authentication executing unit, adapted to authenticate the audio card according to the first authentication information and the second authentication information.

4. The authentication server of claim 3, wherein, the first authentication information comprises a first password generated according to the use count of the audio card, or further comprises the current use count of the audio card; the second authentication information comprises a local password generated according to the first information; and the authentication executing unit further comprises:
a first password judging unit, adapted to compare the first password with the generated local password and, if the two passwords are identical, allow using the audio card and control a service control point (SCP) to store the current first password, or the current use count, or both the current first password and the current use count of the audio card, or else trigger a judgment count comparing unit; and
a first judgment count comparing unit, adapted to determine whether the number of judgments made by the password judging unit exceeds a present threshold and, if the threshold is crossed, forbid using the audio card, or else generate another local password according to the previous local password and trigger the password judging unit again.

5. The authentication server of claim 3, wherein, the first authentication information comprises a first password generated according to the use count of the audio card and further comprises the current use count of the audio card; the second authentication information comprises a generated local password and a generated use count of the audio card; and the authentication executing unit further comprises:
a second password judging unit, adapted to judge whether the first password is identical with the local password and send the judgment result to an authentication operating unit;
a use count comparing unit, adapted to judge whether the current use count of the audio card is the same as the generated use count and send the judgment result to the authentication operating unit;
an authentication operating unit, adapted to allow using the audio card and control an SCP to store the current use count of the audio card or both the current use count of the audio card and the current first password if the current use count of the audio card is the same as the generated use count and the first password is the same as the local password; or forbid using the audio card if the current use count differs from the generated use count; or trigger a judgment count comparing unit if the current use count of the audio card is the same as the generated use count and the first password differs from the local password; and
a second judgment count comparing unit, adapted to determine whether the number of judgments made by the password judging unit exceeds a present threshold and, if the threshold is crossed, forbid using the audio card, or else generate another local password according to the previous local password and trigger the password judging unit again.

6. A system for authentication by password, comprising:
an audio card information extracting apparatus, adapted to receive an audio signal that contains an account ID and first authentication information dynamically generated, sent by an audio card through a communication terminal, and extract the account ID and the first authentication information from the audio signal;
an audio card authentication controller, adapted to acquire a first information according to the account ID of the audio card provided by the audio card information extracting apparatus and send the first information to an audio card authentication server; and
an audio card authentication server, adapted to generate second authentication information of the audio card according to the first information, authenticate the audio card according to the first authentication information and the generated second authentication information, and allow using the audio card if the authentication succeeds or forbid using the audio card if the authentication fails.

7. The system of claim 6, wherein, the audio card information extracting apparatus is placed at a service switching point (SSP), the audio card authentication controller is placed at a service control point (SCP), and the communication terminal sends the audio signal generated by the audio card to the authentication server by way of the SSP and the SCP, wherein:
the SSP is adapted to demodulate the audio signal sent by the communication terminal to get the account ID and the first authentication information contained in the audio signal and send the information to the SCP; and
the SCP is adapted to acquire the first information of the audio card from a database according to the account ID and send the first information and the first authentication information to the authentication server.

8. A method for authentication by password, comprising:
receiving an audio signal generated by an audio card, which comprises an account ID and dynamically generated first authentication information;
extracting the account ID and the first authentication information from the audio signal, determining first information of the audio card and generating second authentication information of the audio card according to the first information; and
authenticating the audio card that sends the audio signal according to the first authentication information and the second authentication information and allowing using the audio card if the authentication succeeds or forbidding using the audio card if the authentication fails.

9. The method of claim 8, wherein, the first authentication information comprises a first password generated according to the use count of the audio card, or further comprises the current use count of the audio card; the second authentication information comprises a local password generated according to the first information, where the first information is initial information of the audio card if the audio card is used for the first time or is the first password stored at the previous normal use of the audio card, or the count of the previous correct use of the audio card, or both the first password stored at the previous normal use of the audio card and the count of the previous correct use; and the authentication procedure further comprises:
by the authentication server, comparing the first password with the generated local password and, if the two passwords are identical, allowing using the audio card and controlling a service control point (SCP) to store the current first password, or the current use count of the audio card, or both the current first password and the current use count of the audio card, or else judging whether the number of comparison made exceeds a preset threshold and forbidding using the audio card if the threshold is exceeded or generating another local password according to the previous local password and executing authentication again if the threshold is not crossed.

10. The method of claim 8, wherein, the first authentication information comprises a first password dynamically generated according to the current use count of the audio card and further comprises the current use count of the audio card; the second authentication information comprises a generated local password and a generated use count of the audio card; and the authentication procedure further comprises:
allowing using the audio card and controlling an SCP to store only the current use count of the audio card or both the current use count of the audio card and the current first password if the current use count of the audio card is the same as the generated use count and the first password is the same as the local password, or forbidding using the audio card if the current use count of the audio card differs from the generated use count; or
generating another local password according to the previous local password and executing authentication again if the current use count of the audio card is the same as the generated use count and the first password differs from the local password but the number of comparison made does not exceed a preset threshold, or forbidding using the audio card if the number of comparison made exceeds the preset threshold.
